# EUROPEAN PATENT APPLICATION

(11) **EP 4 682 965 A1**
(43) Date of publication of application: **21.01.2026**
(21) Application number: 25182263.1
(22) Date of filing: 12.06.2025
(51) Int. Cl.: H01M 4/04, H01M 4/134, H01M 4/1395, H01M 4/38, H01M 10/0525, H01M 10/0567

(54) **ELECTROCHEMICAL APPARATUS AND ELECTRONIC APPARATUS**

(30) Priority: 13.06.2024 CN 202410763763
(71) Applicant: Ningde Amperex Technology Ltd., Ningde City, Fujian Province 352100 (CN)
(72) Inventor: ZHANG, Jiaming, Ningde City, Fujian Province, China, 352100 (CN); JIAN, Junhua, Ningde City, Fujian Province, China, 352100 (CN); TANG, Chao, Ningde City, Fujian Province, China, 352100 (CN)
(74) Representative: Icosa

(57) **Abstract**

An electrochemical apparatus includes a negative electrode plate and an electrolyte. The negative electrode plate includes a negative electrode material layer. The negative electrode material layer includes a silicon-based material. The silicon-based material includes silicon element, and based on a total mass of the negative electrode material layer, a mass percentage of the silicon element is 30% to 60%. The electrolyte includes fluoroethylene carbonate and a compound of formula I. R₁ and R₂ are each independently selected from hydrogen atom, fluorine atom, substituted or unsubstituted C₁-C₅ alkyl group, substituted or unsubstituted C₆-C₁₀ aryl group, and substituted or unsubstituted C₂-C₆ carboxylate group, and when substituted, the substituents on the carboxylate group, the alkyl group, and the aryl group are fluorine atoms.

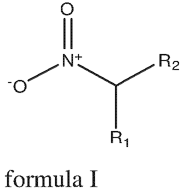

## Description

### TECHNICAL FIELD

This application relates to the field of electrochemical technologies, and in particular, to an electrochemical apparatus and an electronic apparatus.

### BACKGROUND

With the rapid development of electronic products, electrochemical apparatuses (such as lithium-ion batteries) are widely used in mobile phones, notebook computers, tablet computers, unmanned aerial vehicles, electric vehicles, electric tools, power storage systems, and the like due to their advantages such as high energy density, miniaturization, and light weight. Especially in the 3C product sector, consumers remain extremely high demand for longer battery life in electronic products, thus driving a need for higher energy density in electrochemical apparatuses.

To further improve the energy density of electrochemical apparatuses, it is necessary to use electrode materials with high specific capacity. Silicon-based materials, as a type of alloying-type negative electrode material, can offer an ultra-high specific capacity of up to 4200 mAh/g. Therefore, silicon-based materials are highly promising for enhancing energy density. However, lithiation of silicon-based materials results in the formation of lithium-silicon alloys. These alloys are highly reactive, readily attacking solvent molecules in the electrolyte. This leads to rapid electrolyte consumption, active lithium loss, and consequently, poor cycling stability of the electrochemical apparatus.

### SUMMARY

This application is intended to provide an electrochemical apparatus and an electronic apparatus, so as to improve the cycling stability of the electrochemical apparatus.

A first aspect of this application provides an electrochemical apparatus including a negative electrode plate and an electrolyte, where:
the negative electrode plate includes a negative electrode material layer, the negative electrode material layer includes a silicon-based material, the silicon-based material includes silicon element, and based on a total mass of the negative electrode material layer, a mass percentage of the silicon element is 30% to 60%; and
the electrolyte includes fluoroethylene carbonate and a compound of formula I: 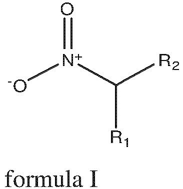
where R₁ and R₂ are each independently selected from hydrogen atom, fluorine atom, substituted or unsubstituted C₁-C₅ alkyl group, substituted or unsubstituted C₆-C₁₀ aryl group, and substituted or unsubstituted C₂-C₆ carboxylate group, and when substituted, the substituents on the carboxylate group, the alkyl group, and the aryl group are fluorine atoms. Controlling the mass percentage of the silicon element within the foregoing range can enable the electrochemical apparatus to provide the space required for the expansion of nano-silicon particles in the process of charging and discharging. This effectively mitigates issues such as cracking of the negative electrode active material caused by the expansion of silicon nanoparticles, thereby improving the energy density and cycling performance of the electrochemical apparatus. The use of the compound of formula I as a pre-film-forming additive in combination with fluoroethylene carbonate, interfacial film-forming properties of fluoroethylene carbonate provide a certain level of protection against continuous decomposition of the electrolyte at the interface. Furthermore, the compound of formula I lowers the consumption rate of fluoroethylene carbonate, thereby enhancing the cycling stability of the electrochemical apparatus.

In an embodiment of this application, the compound of formula I includes at least one of the following compounds:

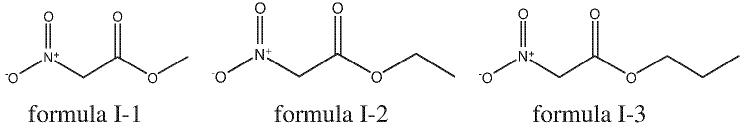

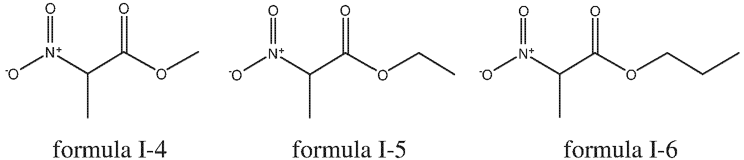

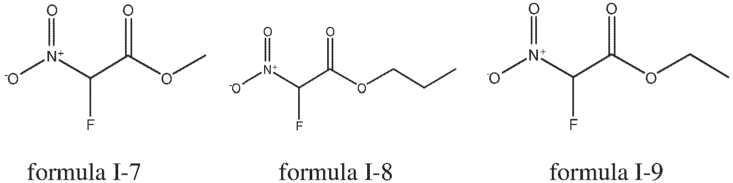

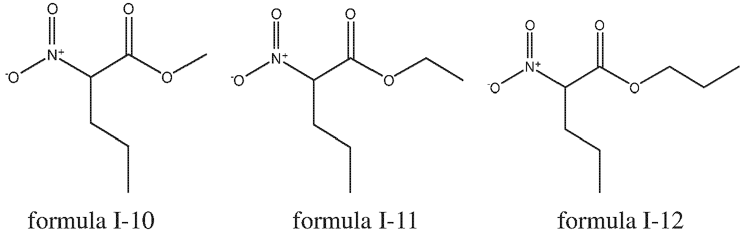

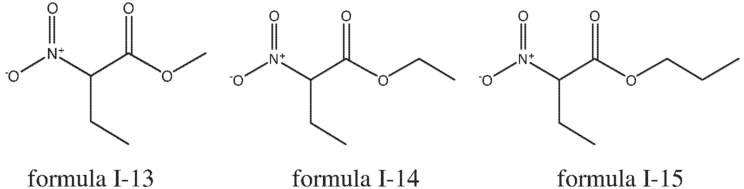

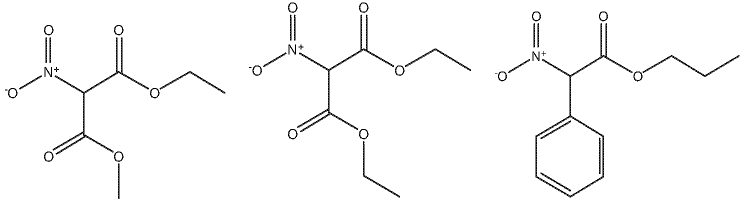

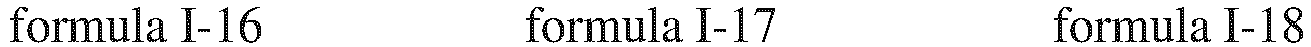

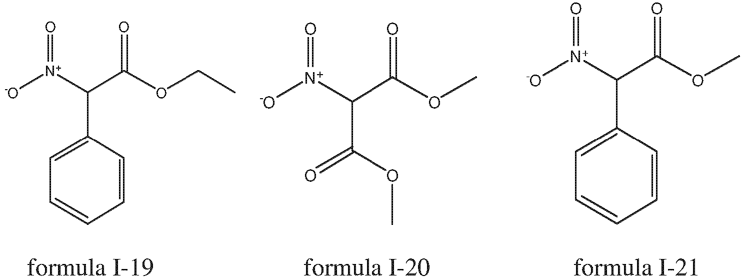

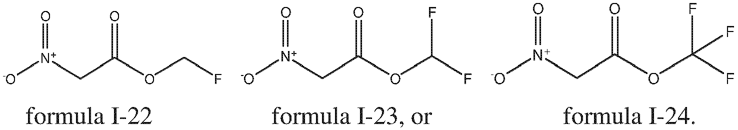

In an embodiment of this application, based on a total mass of the electrolyte, a mass percentage of fluoroethylene carbonate is 1% to 30%.

In an embodiment of this application, based on a total mass of the electrolyte, a mass percentage of fluoroethylene carbonate is 10% to 30%. Controlling the mass percentage of fluoroethylene carbonate within the foregoing range can enable FEC to effectively meet the consumption demands during long-term cycling, thereby improving the cycling stability of the electrochemical apparatus.

In an embodiment of this application, based on a total mass of the electrolyte, a mass percentage of the compound of formula I is 0.01% to 5%. Controlling the mass percentage of the compound of formula I within the foregoing range helps improve the integrity of the interfacial film layer and mitigate issues such as poor low temperature and rate discharge performance of the electrochemical apparatus due to hindered ion transport at the interface, thereby enhancing the cycling stability of the electrochemical apparatus.

In an embodiment of this application, based on a total mass of the electrolyte, a mass percentage of the compound of formula I is 0.1% to 2%.

In an embodiment of this application, the electrolyte further includes a dinitrile compound, and the dinitrile compound including at least one of succinonitrile, glutaronitrile, methylglutaronitrile, adiponitrile, pimelonitrile, suberonitrile, azelaonitrile, or sebaconitrile; and based on a total mass of the electrolyte, a mass percentage of the dinitrile compound is 0.1% to 3%. Controlling the mass percentage of the dinitrile compound within the foregoing range helps enhance the stability of the SEI film and reduce the reactivity of the negative electrode active material, thereby enhancing the cycling stability of the electrochemical apparatus.

In an embodiment of this application, the electrolyte further includes a sulfur-oxygen double bond-containing cyclic compound, the sulfur-oxygen double bond-containing cyclic compound including at least one of 1,3-propane sultone, 1,4-butane sultone, or 2,4-butane sultone; and based on a total mass of the electrolyte, a mass percentage of the sulfur-oxygen double bond-containing cyclic compound is 0.1% to 5%. Controlling the mass percentage of the sulfur-oxygen double bond-containing cyclic compound within the foregoing range can enable the sulfur-oxygen double bond-containing cyclic compound and the compound of formula I to work synergistically in the process of film formation. This helps the formation of the interfacial film with higher stability on the surface of silicon particles, endowing the electrochemical apparatus with good cycling stability.

In an embodiment of this application, the silicon-based material includes at least one of a silicon-oxygen composite material or a silicon-carbon composite material, an inorganic material is present on particle surface of the silicon-oxygen composite material or silicon-carbon composite material, and the inorganic material includes at least one of LiF, NaF, KF, MgF₂, CaF₂, or AlF₃; and based on a mass of the silicon-based material, a mass percentage of the inorganic material is 0.5% to 2%. The use of the silicon-based material and the inorganic material and controlling the mass percentage of the inorganic material within the foregoing range help enhance the stability of the negative electrode active particles, thereby enhancing the cycling performance of the electrochemical apparatus.

In an embodiment of this application, the electrolyte further includes a first component, and the first component includes at least one of C₂-C₁₀ linear carbonate or C₂-C₁₀ linear carboxylate; the C₂-C₁₀ linear carbonate includes at least one of dimethyl carbonate, diethyl carbonate, or dipropyl carbonate; the C₂-C₁₀ linear carboxylate includes at least one of propyl acetate, butyl acetate, ethyl propionate, propyl propionate, butyl propionate, ethyl butyrate, propyl butyrate, butyl butyrate, ethyl isobutyrate, propyl isobutyrate, butyl isobutyrate, or isobutyl isobutyrate; and based on a total mass of the electrolyte, a mass percentage of the first component is 5% to 55%. Linear carbonates and linear carboxylates have the characteristic of low viscosity, and their addition as co-solvents to the electrolyte helps enhance the overall ionic conductivity of the electrolyte, so that the electrochemical apparatus exhibits good cycling stability.

A second aspect of this application provides an electronic apparatus including the electrochemical apparatus according to the first aspect of this application. The electrochemical apparatus of this application exhibits good cycling stability, so that the electronic apparatus of this application has a long service life.

This application has the following beneficial effects.

This application provides an electrochemical apparatus and an electronic apparatus. The electrochemical apparatus includes a negative electrode plate and an electrolyte, where the negative electrode plate includes a negative electrode material layer, the negative electrode material layer includes a silicon-based material, the silicon-based material includes a silicon element, and based on a mass of the negative electrode material layer, a mass percentage of the silicon element is 30% to 60%. The electrolyte includes a compound of formula I and fluoroethylene carbonate (FEC), where R₁ and R₂ are each independently selected from hydrogen atom, fluorine atom, substituted or unsubstituted C₁-C₅ alkyl group, substituted or unsubstituted C₆-C₁₀ aryl group, and substituted or unsubstituted C₂-C₆ carboxylate group, and when substituted, the substituents on the carboxylate group, the alkyl group, and the aryl group are fluorine atoms. The compound of formula I including NO₂-R₁-R₂ can form an interfacial film rich in inorganic substances such as Li₃N and Li₂O on the surface of silicon particles. The compound of formula I exhibits a preferential decomposition characteristic due to its decomposition potential preceding that of FEC, reducing the damage to the solid electrolyte interface (SEI) film on the surface of silicon particles and thereby lowering the consumption rate of FEC. This thus mitigates the issue of poor cycling performance of the electrochemical apparatus caused by excess or deficiency of FEC in the electrochemical apparatus with the negative electrode active material containing silicon element.

Certainly, when any product or method of this application is implemented, all advantages described above are not necessarily demonstrated simultaneously.

### DESCRIPTION OF EMBODIMENTS

The following clearly and completely describes the technical solutions in some embodiments of this application. Apparently, the described embodiments are only some but not all of the embodiments of this application. All other embodiments obtained by persons skilled in the art based on this application shall fall within the protection scope of this application.

It should be noted that, in specific implementations of this application, the lithium-ion battery is used as an example of the electrochemical apparatus to illustrate this application. However, the electrochemical apparatus of this application is not limited to the lithium-ion battery. Specific technical solutions are as follows.

A first aspect of this application provides an electrochemical apparatus including a negative electrode plate and an electrolyte, where the negative electrode plate includes a negative electrode material layer, the negative electrode material layer includes a silicon-based material, the silicon-based material includes a silicon element, and based on a total mass of the negative electrode material layer, a mass percentage of the silicon element is 30% to 60%. The electrolyte includes a compound of formula I and fluoroethylene carbonate: 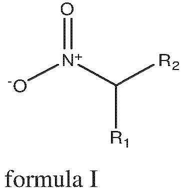 where R₁ and R₂ are each independently selected from hydrogen atom, fluorine atom, substituted or unsubstituted C₁-C₅ alkyl group, substituted or unsubstituted C₆-C₁₀ aryl group, and substituted or unsubstituted C₂-C₆ carboxylate group, and when substituted, the substituents on the carboxylate group, the alkyl group, and the aryl group are fluorine atoms. Controlling the mass percentage of the silicon element within the foregoing range can enable the electrochemical apparatus to provide the space required for the expansion of nano-silicon particles in the process of charging and discharging. This effectively mitigates issues such as cracking of the negative electrode active material caused by the expansion of silicon nanoparticles, thereby improving the energy density and cycling performance of the electrochemical apparatus. However, in an electrochemical apparatus containing the silicon-based material, the highly active reactivity of a lithium alloy formed after lithiation of the silicon-based material leads to the rapid consumption of the electrolyte, thereby affecting the cycling performance of the electrochemical apparatus. To mitigate the above issues, the inventors of this application discovered that the use of the compound of formula I including NO₂-R₁-R₂ can form an interfacial film rich in inorganic substances such as Li₃N and Li₂O on the surface of silicon particles. In addition, the compound of formula I containing unsaturated bonds exhibits a preferential decomposition characteristic due to its decomposition potential preceding that of FEC, reducing the damage to the solid electrolyte interface (SEI) film on the surface of silicon particles and thereby lowering the consumption rate of FEC. Moreover, the compound of formula I also contains carboxylate functional groups having good ionic conductivity, and this ensures excellent ion transport on the surface of the negative electrode side. Therefore, the use of the compound of formula I as a pre-film-forming additive in combination with fluoroethylene carbonate, interfacial film-forming properties of fluoroethylene carbonate provide a certain level of protection against continuous decomposition of the electrolyte at the interface. Furthermore, the compound of formula I lowers the consumption rate of fluoroethylene carbonate, thereby enhancing the cycling stability of the electrochemical apparatus.

In an embodiment of this application, the compound of formula I includes at least one of the following compounds:

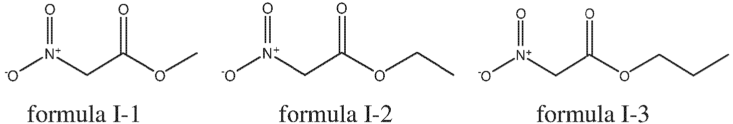

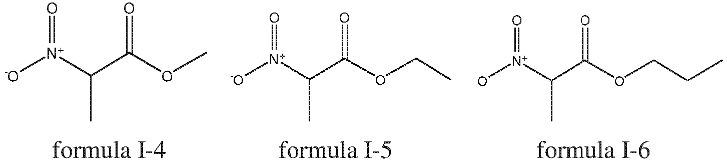

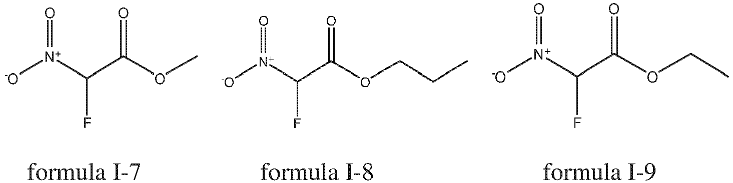

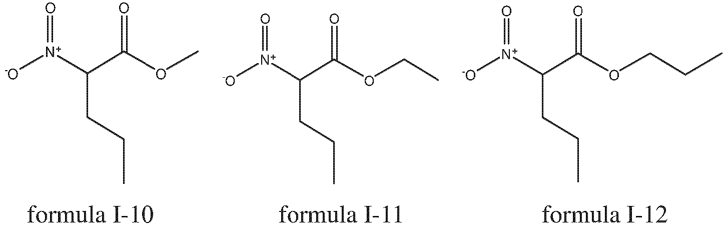

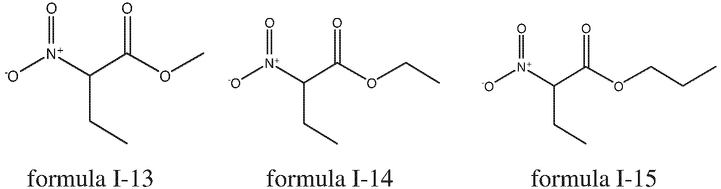

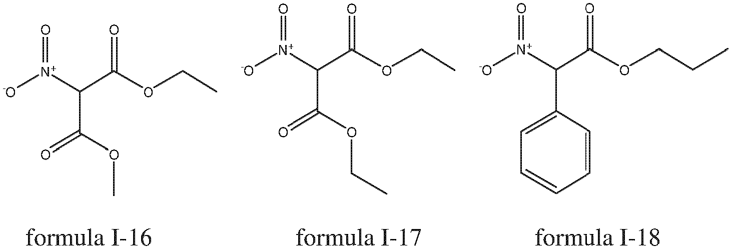

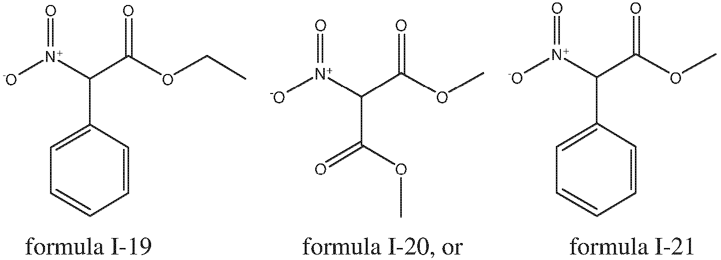

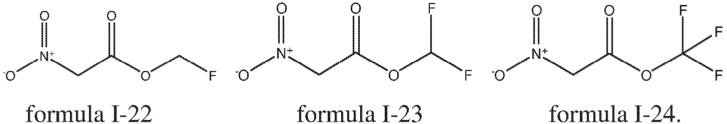

The use of the compound of formula I helps further enhance the stability and flexibility of the formed interfacial film, thereby further reducing side reactions between the electrolyte and the negative electrode active material and thus enhancing the cycling performance of the electrochemical apparatus.

In an embodiment of this application, based on a total mass of the electrolyte, a mass percentage of fluoroethylene carbonate is 1% to 30%. For example, the mass percentage of fluoroethylene carbonate may be 1%, 3%, 5%, 8%, 10%, 12%, 15%, 18%, 20%, 22%, 25%, 28%, 30%, or a range defined by any two of the foregoing values. Controlling the mass percentage of fluoroethylene carbonate within the foregoing range can enable FEC to effectively meet the consumption demands during long-term cycling, thereby improving the cycling stability of the electrochemical apparatus.

In an embodiment of this application, based on a total mass of the electrolyte, a mass percentage of fluoroethylene carbonate is 10% to 30%. For example, the mass percentage of fluoroethylene carbonate may be 10%, 12%, 15%, 18%, 20%, 22%, 25%, 28%, 30%, or a range defined by any two of the foregoing values. Controlling the mass percentage of fluoroethylene carbonate within the foregoing range helps enable FEC to better meet the consumption demands during long-term cycling, further improving the cycling stability of the electrochemical apparatus.

In an embodiment of this application, based on a total mass of the electrolyte, a mass percentage of the compound of formula I is 0.01% to 5%. For example, the mass percentage of the compound of formula I may be 0.01%, 0.3%, 0.5%, 0.8%, 1%, 1.3%, 1.5%, 1.8%, 2%, 2.3%, 2.5%, 2.8%, 3%, 3.3%, 3.5%, 3.8%, 4%, 4.3%, 4.5%, 4.8%, 5%, or a range defined by any two of the foregoing values. Controlling the mass percentage of the compound of formula I within the foregoing range helps improve the integrity of the interfacial film layer and mitigate issues such as poor low temperature and rate discharge performance of the electrochemical apparatus due to hindered ion transport at the interface, thereby enhancing the cycling stability of the electrochemical apparatus.

In an embodiment of this application, based on a total mass of the electrolyte, a mass percentage of the compound of formula I is 0.1% to 2%. For example, the mass percentage of the compound of formula I may be 0.1%, 0.3%, 0.5%, 0.8%, 1%, 1.3%, 1.5%, 1.8%, 2%, or a range defined by any two of the foregoing values. Controlling the mass percentage of the compound of formula I within the foregoing range helps better improve the integrity of the interfacial film layer and better mitigate issues such as poor low temperature and rate discharge performance of the electrochemical apparatus due to hindered ion transport at the interface, thereby further enhancing the cycling stability of the electrochemical apparatus.

In an embodiment of this application, the electrolyte further includes a dinitrile compound, and the dinitrile compound including at least one of succinonitrile, glutaronitrile, methylglutaronitrile, adiponitrile, pimelonitrile, suberonitrile, azelaonitrile, or sebaconitrile; and based on a total mass of the electrolyte, a mass percentage of the dinitrile compound is 0.1% to 3%. For example, the mass percentage of the dinitrile compound may be 0.1%, 0.3%, 0.5%, 0.8%, 1%, 1.3%, 1.5%, 1.7%, 2%, 2.3%, 2.5%, 2.8%, 3%, or a range defined by any two of the foregoing values. Controlling the mass percentage of the dinitrile compound within the foregoing range helps enhance the stability of the SEI film and reduce the reactivity of the negative electrode active material, thereby mitigating the issue of excessive consumption of the electrolyte and enhancing the cycling stability of the electrochemical apparatus.

In an embodiment of this application, the electrolyte further includes a sulfur-oxygen double bond-containing cyclic compound, the sulfur-oxygen double bond-containing cyclic compound including at least one of 1,3-propane sultone, 1,4-butane sultone, or 2,4-butane sultone; and based on a total mass of the electrolyte, a mass percentage of the sulfur-oxygen double bond-containing cyclic compound is 0.1% to 5%. For example, the mass percentage of the sulfur-oxygen double bond-containing cyclic compound may be 0.1%, 0.3%, 0.5%, 0.8%, 1%, 1.3%, 1.5%, 1.7%, 2%, 2.3%, 2.5%, 2.8%, 3%, 3.3%, 3.5%, 3.8%, 4%, 4.3%, 4.5%, 4.8%, 5%, or a range defined by any two of the foregoing values. Controlling the mass percentage of the sulfur-oxygen double bond-containing cyclic compound within the foregoing range can enable the sulfur-oxygen double bond-containing cyclic compound and the compound of formula I to work synergistically in the process of film formation. This helps the formation of the interfacial film with higher stability on the surface of silicon particles and the reduction of side reactions between the silicon-based material and the electrolyte, endowing the electrochemical apparatus with good cycling stability.

In an embodiment of this application, the electrolyte further includes a first component, and the first component includes at least one of C₂-C₁₀ linear carbonate or C₂-C₁₀ linear carboxylate; the C₂-C₁₀ linear carbonate includes at least one of dimethyl carbonate, diethyl carbonate, or dipropyl carbonate; the C₂-C₁₀ linear carboxylate includes at least one of propyl acetate, butyl acetate, ethyl propionate, propyl propionate, butyl propionate, ethyl butyrate, propyl butyrate, butyl butyrate, ethyl isobutyrate, propyl isobutyrate, butyl isobutyrate, or isobutyl isobutyrate; and based on a total mass of the electrolyte, a mass percentage of the first component is 5% to 55%. For example, the mass percentage of the first component may be 5%, 7%, 10%, 13%, 15%, 17%, 20%, 23%, 25%, 27%, 30%, 33%, 35%, 37%, 40%, 43%, 45%, 47%, 50%, 53%, 55%, or a range defined by any two of the foregoing values. Linear carbonates and linear carboxylates have the characteristic of low viscosity, and their addition as co-solvents to the electrolyte helps enhance the overall ionic conductivity of the electrolyte, so that the electrochemical apparatus exhibits good cycling stability.

In an embodiment of this application, the first component includes a linear carbonate, and based on a total mass of the electrolyte, a mass percentage of the linear carbonate is 5% to 55%. If the electrolyte includes the first component, the electrochemical apparatus exhibits good cycling stability.

In an embodiment of this application, the first component includes a linear carboxylate, and based on a total mass of the electrolyte, a mass percentage of the linear carboxylate is 5% to 55%. If the electrolyte includes the first component, the electrochemical apparatus exhibits good cycling stability.

In an embodiment of this application, the first component includes linear carbonate and linear carboxylate. In this case, their respective mass percentages are not particularly limited, provided that a sum of the mass percentage of the first component meets the range in this application.

In this application, features of different components contained in the electrolyte can be combined. The embodiments covered by these combinations are all within the protection scope of this application.

In this application, the electrolyte further includes a lithium salt and a base solvent. The type of lithium salt is not particularly limited in this application, and any known lithium salts in the art may be used. For example, the lithium salt may include but is not limited to at least one of lithium hexafluorophosphate LiBF₄, LiPF₆, LiAsF₆, LiClO₄, LiB(C₆H₅)₄, LiCH₃SO₃, LiCF₃SO₃, LiN(SO₂CF₃)₂, LiC(SO₂CF₃)₃, and LiPO₂F₂. The base solvent is not particularly limited in this application, provided that the objectives of this application can be achieved. For example, the base solvent may include at least one of non-fluorinated cyclic carbonates, ether compounds, other linear carbonates, other linear carboxylates, or other organic solvents. The ether compounds may include but are not limited to at least one of dibutyl ether, tetraethylene glycol dimethyl ether, diethylene glycol dimethyl ether, 1,2-dimethoxyethane, 1,2-diethoxyethane, ethoxymethoxyethane, 2-methyltetrahydrofuran, or tetrahydrofuran. The other linear carbonates include at least one of ethyl methyl carbonate, methyl propyl carbonate (MPC), or ethyl propyl carbonate (EPC). The non-fluorinated cyclic carbonates may include but are not limited to at least one of ethylene carbonate (EC), propylene carbonate (PC), butylene carbonate (BC), or vinyl ethylene carbonate (VEC). The other linear carboxylates include but are not limited to at least one of ethyl acetate, n-propyl acetate, tert-butyl acetate, methyl propionate, methyl tert butyrate, ethyl tert butyrate, 2,2-difluoroethyl acetate, 2,2,2-trifluoroethyl acetate, hexafluoroisopropyl acetate, 2,2-difluoropropionate, 2,2,2-trifluoropropionate, or hexafluoroisopropyl propionate. The other organic solvents may include but are not limited to at least one of dimethyl sulfoxide, 1,2-dioxolane, sulfolane, methyl-sulfolane, 1,3-dimethyl-2-imidazolidinone, N-methyl-2-pyrrolidone, methylamide, dimethylformamide, trimethyl phosphate, triethyl phosphate, trioctyl phosphate, or phosphate ester. The mass percentages of the lithium salt and the other organic solvents in the electrolyte are not particularly limited in this application, provided that the objectives of this application can be achieved. For example, based on the mass of the electrolyte, a mass percentage of the lithium salt may be 8% to 20%, and a mass percentage of the base solvent may be 0% to 92%.

In an embodiment of this application, the electrolyte may include a compound of formula I, FEC, a lithium salt, and a base solvent; mass percentages of the compound of formula I, the FEC, and the lithium salt are as described above; and based on the mass of the electrolyte, a mass percentage of the base solvent is 45% to 91.89%. The electrochemical apparatus including the electrolyte also exhibits good cycling stability.

In an embodiment of this application, the electrolyte may include a compound of formula I, FEC, a lithium salt, a dinitrile compound, and a base solvent; mass percentages of the compound of formula I, the FEC, the lithium salt, and the dinitrile compound are as described above; and based on the mass of the electrolyte, a mass percentage of the base solvent is 42% to 91.79%. The electrochemical apparatus including the electrolyte also exhibits good cycling stability.

In an embodiment of this application, the electrolyte may include a compound of formula I, FEC, a lithium salt, a sulfur-oxygen double bond-containing cyclic compound, and a base solvent; mass percentages of the compound of formula I, the FEC, the lithium salt, and the sulfur-oxygen double bond-containing cyclic compound are as described above; and based on the mass of the electrolyte, a mass percentage of the base solvent is 40% to 91.79%. The electrochemical apparatus including the electrolyte also exhibits good cycling stability.

In an embodiment of this application, the electrolyte may include a compound of formula I, FEC, a lithium salt, a first component, and a base solvent; mass percentages of the compound of formula I, the FEC, the lithium salt, and the first component are as described above, and based on a mass of the electrolyte, a mass percentage of the base solvent is 0% to 86.89%. The electrochemical apparatus including the electrolyte also exhibits good cycling stability.

In an embodiment of this application, the electrolyte may include a compound of formula I, FEC, a lithium salt, a dinitrile compound, a sulfur-oxygen double bond-containing cyclic compound, and a base solvent; mass percentages of the compound of formula I, the FEC, the lithium salt, the dinitrile compound, and the sulfur-oxygen double bond-containing cyclic compound are as described above; and based on a mass of the electrolyte, a mass percentage of the base solvent is 37% to 91.69%. The electrochemical apparatus including the electrolyte also exhibits good cycling stability.

In an embodiment of this application, the electrolyte may include a compound of formula I, FEC, a lithium salt, a dinitrile compound, a first component, and a base solvent; mass percentages of the compound of formula I, the FEC, the lithium salt, the dinitrile compound, and the first component are as described above; and based on the mass of the electrolyte, a mass percentage of the base solvent is 0% to 86.79%. The electrochemical apparatus including the electrolyte also exhibits good cycling stability.

In an embodiment of this application, the electrolyte may include a compound of formula I, FEC, a lithium salt, a dinitrile compound, a sulfur-oxygen double bond-containing cyclic compound, a first component, and a base solvent; mass percentages of the compound of formula I, the FEC, the lithium salt, the dinitrile compound, the sulfur-oxygen double bond-containing cyclic compound, and the first component are as described above; and based on a mass of the electrolyte, a mass percentage of the base solvent is 0% to 86.69%. The electrochemical apparatus including the electrolyte also exhibits good cycling stability.

In this application, the electrochemical apparatus further includes a negative electrode plate. The negative electrode plate includes a negative electrode current collector and a negative electrode material layer disposed on at least one surface of the negative electrode current collector. The "negative electrode material layer disposed on at least one surface of the negative electrode current collector" means that the negative electrode material layer may be disposed on one or two surfaces of the negative electrode current collector in its thickness direction. It should be noted that the "surface" herein may be an entire region or a partial region of the negative electrode current collector. This is not particularly limited in this application, provided that the objectives of this application can be achieved.

In an embodiment of this application, the silicon-based material includes at least one of a silicon-oxygen composite material or a silicon-carbon composite material, an inorganic material present on particle surface of the silicon-oxygen composite material or silicon-carbon composite material includes at least one of LiF, NaF, KF, MgF₂, CaF₂, or AlF₃; and based on a mass of the silicon-based material, a mass percentage of the inorganic material is 0.5% to 2%. For example, the mass percentage of the inorganic material may be 0.5%, 0.8%, 1%, 1.2%, 1.5%, 1.8%, 2%, or a range defined by any two of the foregoing values. The use of the silicon-based material and the inorganic material and controlling the mass percentage of the inorganic material within the foregoing range help enhance the stability of the negative electrode active particles, thereby helping further buffer the volume expansion of silicon during the electrochemical process and further enhancing the cycling performance and high-temperature storage performance of the electrochemical apparatus.

The preparation method of the silicon-based material is not particularly limited in this application. For example, the preparation method of the silicon-based material may include but is not limited to the following steps: adding a silicon-containing substance and a surface inorganic material at a certain mass ratio to an organic solvent to form a suspension, mixing them to obtain a mixture, followed by filtering and drying, to obtain a silicon-oxygen composite material or a silicon-carbon composite material. The organic solvent is not particularly limited in this application, provided that the objectives of this application can be achieved. For example, the organic solvent may be ethanol. The silicon-containing substance is no particularly limited in this application, provided that the objectives of this application can be achieved. For example, the silicon-containing substance may be selected from at least one of microporous carbon material loaded with nano silicon, silicon-carbon material, silicon-oxygen material, micron silicon, Si-Sn alloy, Si-Mg alloy, Si-Ge alloy, or Si-Zn alloy.

The negative electrode current collector is not particularly limited in this application, provided that the objectives of this application can be achieved. For example, the negative electrode current collector may include but is not limited to copper foil, aluminum foil, nickel foil, or a carbon-based current collector. For example, the thickness of the negative electrode current collector is 4 µm to 12 µm. The thickness of the negative electrode material layer is not particularly limited in this application, provided that the objectives of this application can be achieved. For example, the thickness of the negative electrode material layer on a single side is 30 µm to 150 µm. The thickness of the negative electrode plate is not particularly limited in this application, provided that the objectives of this application can be achieved. For example, the thickness of the negative electrode plate is 50 µm to 350 µm. The negative electrode material layer of this application may further include a conductive agent and a binder.

Specifically, the negative electrode active material of this application may further include a carbon material. The carbon material may be selected from at least one of natural graphite, artificial graphite, mesocarbon microbeads, hard carbon, soft carbon, silicon, silicon-carbon composite, Li-Sn alloy, Li-Sn-O alloy, Sn, SnO, SnO₂, spinel-structure lithiated TiO₂-Li₄Ti₅O₁₂, or Li-Al alloy. Based on a total mass of the negative electrode material layer, a mass percentage of the carbon material is 10% to 70%.

The conductive agent and the binder are not particularly limited, provided that the objectives of this application can be achieved. For example, the conductive agent may include at least one of conductive carbon black, laminated graphite, graphene, carbon nanotubes, carbon nanowires, or carbon fibers. Conductive carbon black may include at least one of acetylene black or Ketjen black. The binder may include at least one of lithium polyacrylate, polyvinylidene fluoride (PVDF), vinylidene fluoride-hexafluoropropylene copolymer, styrene-acrylate copolymer, styrene-butadiene copolymer, polyamide, polyacrylonitrile, polyacrylate, polyacrylic acid, polyacrylate, sodium carboxymethyl cellulose (CMC-Na), polyvinyl acetate, polyvinylpyrrolidone, polyethylene oxide, polymethyl methacrylate, polytetrafluoroethylene, polyhexafluoropropylene, styrene butadiene rubber (SBR), carboxymethyl cellulose (CMC), polyaniline, polyimide, polyamide-imide, polysiloxane, epoxy resin, polyester resin, polyurethane resin, or polyfluorene.

Optionally, the negative electrode plate may further include a conductive layer, and the conductive layer is sandwiched between the negative electrode current collector and the negative electrode material layer. The composition of the conductive layer is not particularly limited in this application, and the conductive layer may be a conductive layer commonly used in the art. The conductive layer includes a conductive agent and a binder. The conductive agent and the binder in the conductive layer are not particularly limited in this application and may be at least one of the foregoing conductive agents and the foregoing binders. The mass ratio of the conductive agent to the binder in the conductive layer is not particularly limited in this application, and persons skilled in the art can make selection based on actual needs, provided that the objectives of this application can be achieved. The thickness of the conductive layer is not particularly limited in this application, provided that the objectives of this application can be achieved. For example, the thickness of the conductive layer is 1 µm to 10 µm. The electrochemical apparatus of this application further includes a positive electrode plate and a separator.

In this application, the positive electrode plate includes a positive electrode current collector and a positive electrode material layer disposed on at least one surface of the positive electrode current collector. The "positive electrode material layer disposed on at least one surface of the positive electrode current collector" means that the positive electrode material layer may be disposed on one or two surfaces of the positive electrode current collector in its thickness direction. It should be noted that the "surface" herein may be an entire region or a partial region of the positive electrode current collector. This is not particularly limited in this application, provided that the objectives of this application can be achieved. The positive electrode current collector is not particularly limited in this application, provided that the objectives of this application can be achieved. For example, the positive electrode current collector may include aluminum foil, aluminum alloy foil, a composite current collector (for example, an aluminum-carbon composite current collector), or the like.

The positive electrode material layer in this application includes a positive electrode active material, and the positive electrode active material includes a substance capable of reversibly intercalating and deintercalating active ions such as lithium ions. The positive electrode material layer may be a single-layer structure or a multiple-layer structure, and the multiple positive electrode active material layers may include the same or different positive electrode active materials with each other. The positive electrode active material is not particularly limited in this application, provided that the objectives of this application can be achieved. For example, the positive electrode active material may include but is not limited to at least one of lithium nickel cobalt manganate (for example, NCM811, NCM622, NCM523, NCM111), lithium nickel cobalt aluminum oxide, lithium iron phosphate, lithium-rich manganese-based materials, lithium cobalt oxide (LiCoO₂), lithium manganese oxide, lithium iron manganese phosphate, or lithium titanate. The positive electrode material layer of this application further includes a conductive agent and a binder. The conductive agent and the binder in the positive electrode material layer are not particularly limited in this application, provided that the objectives of this application can be achieved. For example, the conductive agent may include but is not limited to at least one of conductive carbon black, carbon nanotubes (CNTs), carbon fibers, flake graphite, graphene, metal materials, or conductive polymers. The conductive carbon black may include but is not limited to Super P, acetylene black and/or Ketjen black. The carbon nanotubes may include but are not limited to single-walled carbon nanotubes and/or multi-walled carbon nanotubes. The carbon fiber may include but is not limited to vapor grown carbon fiber (VGCF) and/or carbon nanofiber. The metal material may include but is not limited to metal powder and/or metal fiber, and specifically, the metal may include but is not limited to at least one of copper, nickel, aluminum, or silver. The conductive polymer may include but is not limited to at least one of a polyphenylene derivative, polyaniline, polythiophene, polyacetylene, or polypyrrole. The binder may include but is not limited to at least one of polyacrylate, polyimide, polyamide, polyamide-imide, polyvinylidene fluoride, styrene-butadiene copolymer (styrene-butadiene rubber, SBR), sodium alginate, polyvinyl alcohol, polytetrafluoroethylene, polyacrylonitrile, sodium carboxymethyl cellulose (CMC-Na), potassium carboxymethyl cellulose, sodium hydroxymethyl cellulose, or potassium hydroxymethyl cellulose. The mass ratio of the positive electrode active material, the conductive agent, and the binder in the positive electrode material layer is not particularly limited in this application, and persons skilled in the art can make selection based on actual needs, provided that the objectives of this application can be achieved.

The thickness of the positive electrode current collector is not particularly limited in this application, provided that the objectives of this application can be achieved. For example, the thickness of the positive electrode current collector is 5 µm to 20 µm, preferably 6 µm to 18 µm. The thickness of the positive electrode material layer is not particularly limited in this application, provided that the objectives of this application can be achieved. For example, the thickness of the positive electrode material layer on a single side is 30 µm to 120 µm.

The separator is not particularly limited in this application, provided that the objectives of this application can be achieved. For example, the separator may include at least one of polyethylene, polypropylene, polyvinylidene fluoride, polyethylene terephthalate, polyimide, or aramid, where polyethylene and polypropylene may prevent short circuits and may also enhance the stability of the electrochemical apparatus through a shutdown effect. For example, polyethylene may include at least one of high-density polyethylene, low-density polyethylene, or ultra-high-molecular-weight polyethylene. The surface of the separator may include a porous layer, where the porous layer is arranged on at least one surface of the separator. The separator may include at least one of inorganic particle or binder. The porous layer can improve heat resistance, oxidation resistance, and electrolyte infiltration performance of the separator, and enhance adhesion between the separator and the electrode plate. The pore size is not particularly limited, provided that the objectives of this application can be achieved. For example, the pore size may be 0.01 µm to 1 µm. In this application, the thickness of the separator may be 5 µm to 30 µm. The inorganic particles are not particularly limited in this application, provided that the objectives of this application can be achieved. For example, the inorganic particles may include at least one of aluminum oxide (Al₂O₃), silicon oxide (SiO), magnesium oxide (MgO), titanium dioxide (TiO₂), hafnium dioxide (HfO₂), stannic oxide (SnO₂), cerium dioxide (CeO₂), nickel oxide (NiO), zinc oxide (ZnO), calcium oxide (CaO), zirconium dioxide (ZrO₂), yttrium oxide (Y₂O₃), silicon carbide (SiC), boehmite, aluminum hydroxide, magnesium hydroxide, calcium hydroxide, or barium sulfate. For example, the binder for the porous layer may include at least one of polyvinylidene fluoride, a copolymer of vinylidene fluoride-hexafluoropropylene, polyamide, polyacrylonitrile, polyacrylate, polyacrylic acid, acrylate salt, sodium carboxymethyl cellulose, polyvinylpyrrolidone, polyethylene oxide, polymethyl methacrylate, polytetrafluoroethylene, or polyhexafluoropropylene.

The preparation process of the electrochemical apparatus is well known to persons skilled in the art, and is not particularly limited in this application. For example, the preparation process may include but is not limited to the following steps: a positive electrode plate, a separator, and a negative electrode plate are stacked in sequence and go through operations such as winding and folding as needed to obtain an electrode assembly with a winding structure, the electrode assembly is put into a packaging bag, and the packaging bag is injected with an electrolyte and sealed to obtain an electrochemical apparatus; or a positive electrode, a separator, and a negative electrode are stacked in sequence, four corners of the entire laminated structure are fixed with tapes to obtain an electrode assembly with a laminated structure, the electrode assembly is put into a packaging bag, and the packaging bag is injected with an electrolyte and sealed to obtain an electrochemical apparatus. In addition, if necessary, an overcurrent prevention element, a guide plate, and the like may be placed in the packaging bag to prevent pressure increase, overcharge, and overdischarge in the electrochemical apparatus. The packaging bag is not particularly limited in this application, and persons skilled in the art can make selection according to actual requirements, provided that the objectives of this application can be achieved. For example, aluminum-plastic film packaging bags can be used.

According to a second aspect, this application provides an electronic apparatus, which includes the electrochemical apparatus according to the first aspect of this application. Since the electrochemical apparatus of this application has good cycling stability and high-temperature storage performance, the electronic apparatus of this application has a longer service life.

The electronic apparatus of this application is not particularly limited and may be any known electronic apparatus used in the prior art. In some embodiments, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a power-assisted bicycle, a bicycle, a lighting appliance, a toy, a game console, a clock, an electric tool, a flash lamp, a camera, a large household battery, or a lithium-ion capacitor.

### Examples

In the following, examples and comparative examples are given to describe some embodiments of this application in more detail. Various tests and evaluations are performed in the following methods. In addition, unless otherwise specified, "part" and "%" are measured by mass.

### Test methods and devices

### Cycling performance test

The lithium-ion battery was placed in a constant temperature test chamber at 25°C and left standing for 30 minutes to bring the lithium-ion battery to a constant temperature. The lithium-ion battery was charged at a constant current of 0.5C to 4.45 V, then charged at a constant voltage of 4.45 V until the current is 0.025C, left standing for 5 minutes, and discharged at a constant current of 0.5C to 3.0 V. An initial discharge capacity was recorded as C₁. This procedure was repeated for 200 cycles, a discharge capacity C₂ after the 200-th cycle was recorded, and a cycling capacity retention rate of the lithium-ion battery was calculated. Cycling capacity retention rate (%) = C₂/C₁×100%.

### Test for cycling thickness growth rate

The lithium-ion battery was charged at a constant current of 0.5C to 4.45 V, then charged at a constant voltage until the current is 0.025C, and left standing for 5 minutes. The thickness was measured and recorded as the thickness of the lithium-ion battery at initial full charge. The same charge-discharge procedure as in the cycling capacity retention rate test was performed for 500 cycles, and the thickness was measured and recorded as the thickness of the lithium-ion battery after the 500-th cycle.

The cycling thickness growth rate was calculated as the difference between the thickness of the lithium-ion battery after the 500-th cycle and the thickness of the lithium-ion battery at initial full charge, divided by the thickness of the lithium-ion battery at initial full charge. The thickness of the lithium-ion battery was measured using a micrometer, and 5 measurements were performed for 5 different positions to get an average value, which is the cycling thickness growth rate. A smaller cycling thickness growth rate indicates better performance.

### Test for mass percentage of silicon element

The lithium-ion battery that has been discharged to 3.0 V at 0.5C was disassembled. The negative electrode plate was removed and soaked in dimethyl carbonate (DMC) for 20 minutes, and then rinsed with DMC and acetone in turn. Then the negative electrode plate was placed in an oven and baked at 80°C for 12 hours. The negative electrode plate was then placed in a vacuum oven and dried at 100°C for 24 hours. 1 g of the powdered sample was scrapped off the negative electrode material layer on the negative electrode plate with a blade, and then an inductively coupled plasma (Inductively coupled plasma, ICP) analyzer was used to measure the mass percentage of the silicon element in the negative electrode material layer.

### Example 1-1

### <Preparation of positive electrode plate>

Lithium cobaltate, conductive carbon black, and polyvinylidene fluoride (PVDF) as positive electrode active materials were mixed at a mass ratio of 95:2.5:2.5, then N-methylpyrrolidone (NMP) was added as a solvent to prepare a slurry with a solid content of 75%. The slurry was stirred well. The slurry was uniformly applied on one surface of an aluminum foil positive electrode current collector with a thickness of 10 µm and dried at 90°C to obtain a positive electrode plate with a coating thickness of 110 µm. After the foregoing steps were completed, single surface coating of the positive electrode plate was completed. Then, the foregoing steps were repeated on the other surface of the positive electrode plate to obtain a positive electrode plate coated with the positive electrode active material on two surfaces. Cold pressing was carried out after coating was completed, then the positive electrode plate was cut into a size of 74 mm×867 mm and welded with tabs for later use. The thickness of the positive electrode material layer on a single side after cold pressing was 75 µm, and the compact density of the positive electrode material layer was 4 g/cm³.

### <Preparation of silicon-based material>

A microporous carbon material loaded with nano silicon and inorganic material LiF at a mass ratio of 99:1 were added to an ethanol solution to form a suspension, and ball milling was performed on the suspension for uniform dispersion to obtain a mixture. The mixture was filtered and dried to obtain a silicon-carbon composite material with inorganic material LiF on the surface. In the microporous carbon material loaded with nano silicon, the carbon content was 50%; and based on a mass of the silicon-based material, a mass percentage of the inorganic material LiF was 1%.

### <Preparation of negative electrode plate>

The prepared silicon-based material, artificial graphite, carbon nanotubes, and lithium polyacrylate were mixed at a mass ratio of 80:10:2:8, added with deionized water, and mixed well under the action of a vacuum mixer to obtain a negative electrode slurry with a solid content of 30 wt%. The negative electrode slurry was uniformly applied onto one surface of a copper foil of a negative electrode current collector with a thickness of 12 µm. The copper foil was dried at 120°C to obtain a negative electrode plate coated with the negative electrode active material layer of 143 µm in thickness on a single side. The same steps were repeated on another surface of the copper foil to obtain a negative electrode plate coated with the negative electrode active material layer on two sides. The negative electrode plate was then cold-pressed and cut to obtain a negative electrode plate with a size of 78 mm×875 mm. Based on a mass of the negative electrode active material layer, a mass percentage of the silicon element is 39.6%. The thickness of the negative electrode material layer on a single side after cold pressing was 80 µm, and the compact density of the negative electrode material layer was 1 g/cm³.

### <Preparation of electrolyte>

In an argon glove box with water content less than 10 ppm, ethylene carbonate, ethyl methyl carbonate, and diethyl carbonate were mixed at a mass ratio of 3:3:4 to obtain a base solvent, then lithium salt lithium hexafluorophosphate (LiPF₆), fluoroethylene carbonate, and a compound of formula I-1 were added and stirred well to obtain an electrolyte. Based on a mass of the electrolyte, a mass percentage of the lithium salt lithium hexafluorophosphate was 12.5%, a mass percentage of fluoroethylene carbonate was 20%, and a mass percentage of the compound of formula I-1 was 5%. The remainder was the base solvent.

### <Preparation of separator>

A polyethylene (PE) film (provided by Celgard) with a thickness of 15 µm was used.

### <Preparation of lithium-ion battery>

The prepared positive electrode plate, separator, and negative electrode plate were stacked in sequence, so that the separator was sandwiched between the positive electrode plate and the negative electrode plate for separation. Then a resulting stack was wound to obtain an electrode assembly. The electrode assembly was placed into an aluminum-plastic film packaging bag and dried, and then electrolyte was injected, followed by processes such as vacuum packaging, standing, formation, degassing, and trimming to obtain a lithium-ion battery.

### Examples 1-2 to 1-8

These examples were the same as Example 1-1 except that in <Preparation of electrolyte>, parameters related to the mass percentage of the compound of formula I-1 and fluoroethylene carbonate were adjusted according to Table 1, with the mass percentage of the base solvent changing accordingly while the mass percentage of LiPF₆ remained unchanged.

### Examples 1-9 to 1-11

These examples were the same as Example 1-2 except that in <Preparation of electrolyte>, the type of the compound of formula I was adjusted according to Table 1.

### Examples 1-12 and 1-13

These examples were the same as Example 1-2 except that in <Preparation of negative electrode plate>, the mass ratio parameter of silicon-based material to artificial graphite was adjusted so that the mass percentage of the silicon element in the negative electrode material layer was as shown in Table 1, with the mass percentages of carbon nanotubes and lithium polyacrylate remaining unchanged.

### Examples 1-14 to 1-17

These examples were the same as Example 1-1 except that in <Preparation of electrolyte>, parameters related to the mass percentage of the compound of formula I-1 and fluoroethylene carbonate were adjusted according to Table 1, with the mass percentage of the base solvent changing accordingly while the mass percentage of LiPF₆ remained unchanged.

### Examples 2-1 to 2-3

These examples were the same as Example 1-2 except that in <Preparation of electrolyte>, a dinitrile compound was added and its mass percentage was adjusted according to Table 2, with the mass percentage of the base solvent changing accordingly while the mass ratio of the components of the base solvent and the mass percentage of LiPF₆ remained unchanged.

### Examples 3-1 to 3-3

These examples were the same as Example 1-2 except that in <Preparation of electrolyte>, a sulfur-oxygen double bond-containing cyclic compound was added and its mass percentage was adjusted according to Table 3, with the mass percentage of the base solvent changing accordingly while the mass ratio of the components of the base solvent and the mass percentage of LiPF₆ remained unchanged.

### Examples 4-1 to 4-6

These examples were the same as Example 1-2 except that in <Preparation of electrolyte>, a sulfur-oxygen double bond-containing cyclic compound and a dinitrile compound were added and their mass percentages were adjusted according to Table 4, with the mass percentage of the base solvent changing accordingly while the mass ratio of the components of the base solvent and the mass percentage of LiPF₆ remained unchanged.

### Examples 5-1 to 5-4

These examples were the same as Example 1-2 except that in <Preparation of silicon-based material>, the type and mass percentage of the inorganic material on particle surface of the silicon-based material were adjusted according to Table 5.

### Examples 6-1 to 6-9

These examples were the same as Example 1-2 except that in <Preparation of electrolyte>, the first component was added and its mass percentage and type were adjusted according to Table 6, with the mass percentage of the base solvent changing accordingly while the mass ratio of the components of the base solvent and the mass percentages of the compound of formula I-1, FEC, and LiPF₆ remained unchanged.

### Example 6-10

This example was the same as Example 6-8 except that in <Preparation of electrolyte>, a dinitrile compound was added and its mass percentage was adjusted according to Table 6, with the mass percentage of the base solvent changing accordingly while the mass ratio of the components of the base solvent and the mass percentages of the compound of formula I-1, FEC, LiPF₆, and the first component remained unchanged.

### Example 6-11

This example was the same as Example 6-8 except that in <Preparation of electrolyte>, a sulfur-oxygen double bond-containing cyclic compound was added and its mass percentage was adjusted according to Table 6, with the mass percentage of the base solvent changing accordingly while the mass ratio of the components of the base solvent and the mass percentages of the compound of formula I-1, FEC, LiPF₆, and the first component remained unchanged.

### Example 6-12

This example was the same as Example 6-10 except that the related parameters were adjusted according to Table 6.

### Comparative examples 1 and 2

These comparative examples were the same as Example 1-1 except that in <Preparation of electrolyte>, parameters related to the mass percentage of the compound of formula I-1 and fluoroethylene carbonate were adjusted according to Table 1, with the mass percentage of the base solvent changing accordingly while the mass ratio of the components of the base solvent and the mass percentage of LiPF₆ remained unchanged.

Preparation parameters and performance parameters of the examples and comparative examples are shown in Table 1 to Table 6.

**Table 1**

| | Type of compound of formula I | Mass percentage of compound of formula I (%) | Mass percentage of FEC (%) | Mass percentage of base solvent (%) | Mass percentage of silicon element (%) | Cycling capacity retention rate (%) | Cycling thickness growth rate (%) |
|---|---|---|---|---|---|---|---|
| Example 1-1 | I-1 | 5 | 20 | 62.5 | 39.6 | 84 | 18 |
| Example 1-2 | I-1 | 3 | 20 | 64.5 | 39.6 | 85 | 17 |
| Example 1-3 | I-1 | 2 | 20 | 65.5 | 39.6 | 87 | 14 |
| Example 1-4 | I-1 | 0.1 | 20 | 67.4 | 39.6 | 87 | 15 |
| Example 1-5 | I-1 | 0.01 | 20 | 67.49 | 39.6 | 82 | 20 |
| Example 1-6 | I-1 | 3 | 30 | 54.5 | 39.6 | 87 | 20 |
| Example 1-7 | I-1 | 3 | 10 | 74.5 | 39.6 | 82 | 16 |
| Example 1-8 | I-1 | 3 | 1 | 83.5 | 39.6 | 75 | 14 |
| Example 1-9 | I-17 | 3 | 20 | 64.5 | 39.6 | 85 | 16 |
| Example 1-10 | I-14 + I-18 | 1 + 2 | 20 | 64.5 | 39.6 | 87 | 15 |
| Example 1-11 | I-9 + I-19 | 1 + 2 | 20 | 64.5 | 39.6 | 86 | 17 |
| Example 1-12 | I-1 | 3 | 20 | 64.5 | 60 | 84 | 19 |
| Example 1-13 | I-1 | 3 | 20 | 64.5 | 30 | 85 | 16 |
| Example 1-14 | I-1 | 0.001 | 0.5 | 86.999 | 39.6 | 72 | 15 |
| Example 1-15 | I-1 | 7 | 40 | 40.5 | 39.6 | 82 | 22 |
| Example 1-16 | I-1 | 7 | 0.5 | 80 | 39.6 | 71 | 15 |
| Example 1-17 | I-1 | 0.001 | 40 | 47.499 | 39.6 | 83 | 24 |
| Comparative example 1 | I-1 | 3 | / | 84.5 | 39.6 | 70 | 20 |
| Comparative example 2 | / | / | 20 | 67.5 | 39.6 | 78 | 28 |

| | | | | | | | |
|---|---|---|---|---|---|---|---|
| Note: (1) The "/" in Table 1 indicates that there is no corresponding preparation parameter, substance, or performance parameter. (2) Taking Example 1-10 as an example, "Type of compound of formula I" is "I-14 + 1-18", "Mass percentage of compound of formula I" is "1 + 2", indicating that the compound of formula I includes formula I-14 and formula I-18, and that based on the total mass of the electrolyte, the mass percentage of formula I-14 is 1%, and the mass percentage of formula I-18 is 2%. Other examples follow similarly. | | | | | | | |

From Example 1-1 to Example 1-17, Comparative example 1 and Comparative example 2, it can be seen that in this application, with the use of an electrolyte including the compound of formula I and fluoroethylene carbonate and the mass percentage of the silicon element in the negative electrode material layer being controlled within the range in this application, in the examples of this application, the lithium-ion battery has a higher capacity retention rate and/or a lower thickness growth rate, indicating that the lithium-ion battery has good cycling stability. The electrolyte in Comparative example 1 does not include fluoroethylene carbonate, the electrolyte in Comparative example 2 does not include the compound of formula I, and the resulting lithium-ion battery exhibits a low capacity retention rate and/or a high thickness growth rate, indicating that the cycling stability of the lithium-ion battery is inferior.

In the electrolyte, the type and mass percentage of the compound of formula I generally affect the cycling stability of the electrochemical apparatus. From Examples 1-1 to 1-5 and Examples 1-10 to 1-17, it can be seen that with the value of the mass percentage of the compound of formula I being controlled within the range in this application, the lithium-ion battery has a higher capacity retention rate and a lower thickness growth rate, indicating that the lithium-ion battery has good cycling stability.

In the electrolyte, the mass percentage of FEC generally affects the cycling stability of the electrochemical apparatus. From Examples 1-2, Examples 1-6 to 1-8, and Examples 1-14 to 1-17, it can be seen that with the value of the mass percentage of the FEC being controlled within the range in this application,, the lithium-ion battery has a higher capacity retention rate and a lower thickness growth rate, indicating that the lithium-ion battery has good cycling stability.

**Table 2**

| | Type of dinitrile compound | Mass percentage of dinitrile compound (%) | Mass percentage of base solvent (%) | Cycling capacity retention rate (%) | Cycling thickness growth rate (%) |
|---|---|---|---|---|---|
| Example 1-2 | / | / | 64.5 | 85 | 17 |
| Example 2-1 | Glutaronitrile | 0.1 | 64.4 | 85 | 16 |
| Example 2-2 | Adiponitrile | 1.5 | 63 | 86 | 16 |
| Example 2-3 | Sebaconitrile + methylglutaronitrile | 1.5 + 1.5 | 61.5 | 87 | 15 |

| | | | | | |
|---|---|---|---|---|---|
| Note: (1) The "/" in Table 2 indicates that there is no corresponding preparation parameter, substance, or performance parameter. (2) Taking Example 2-3 as an example, "Type of dinitrile compound" is "Sebaconitrile + methylglutaronitrile", "Mass percentage of dinitrile compounds" is "1.5 + 1.5", indicating that the dinitrile compounds include sebaconitrile and methylglutaronitrile, and that based on the total mass of the electrolyte, the mass percentage of sebaconitrile is 1.5%, and the mass percentage of methylglutaronitrile is 1.5%. | | | | | |

The type and mass percentage of the dinitrile compound generally affect the cycling stability of the lithium-ion battery. From Example 1-2 and Examples 2-1 to 2-3, it can be seen that when the electrolyte is further added with a dinitrile compound, and the type and percentage of the dinitrile compound are within the ranges in this application, the resulting lithium-ion battery exhibits a high cycling capacity retention rate and a low thickness growth rate, indicating that the lithium-ion battery has good cycling stability.

**Table 3**

| | Type of sulfur-oxygen double bond-containing cyclic compound | Mass percentage of sulfur-oxygen double bond-containing cyclic compound (%) | Mass percentage of base solvent (%) | Cycling capacity retention rate (%) | Cycling thickness growth rate (%) |
|---|---|---|---|---|---|
| Example 1-2 | / | / | 64.5 | 85 | 17 |
| Example 3-1 | 1,3-propane sultone | 0.1 | 64.4 | 85 | 16 |
| Example 3-2 | 2,4-butane sultone | 2.5 | 62 | 85 | 15 |
| Example 3-3 | 1,4-butane sultone + 2,4-butane sultone | 2 + 3 | 59.5 | 85 | 13 |

| | | | | | |
|---|---|---|---|---|---|
| Note: (1) The "/" in Table 3 indicates that there is no corresponding preparation parameter, substance, or performance parameter. Taking Example 3-3 as an example, "Type of sulfur-oxygen double bond-containing cyclic compound" is "1,4-butane sultone + 2,4-butane sultone", "Mass percentage of sulfur-oxygen double bond-containing cyclic compound" is "2 + 3", indicating that the sulfur-oxygen double bond-containing cyclic compound includes 1,4-butane sultone and 2,4-butane sultone, and that based on the total mass of the electrolyte, the mass percentage of 1,4-butane sultone is 2%, and the mass percentage of 2,4-butane sultone is 3%. | | | | | |

The type and mass percentage of the sulfur-oxygen double bond-containing cyclic compound generally affect the cycling stability of the lithium-ion battery. From Example 1-2 and Examples 3-1 to 3-3, it can be seen that when the electrolyte is further added with a sulfur-oxygen double bond-containing cyclic compound, and the type and percentage of the sulfur-oxygen double bond-containing cyclic compound are within the ranges in this application, the resulting lithium-ion battery exhibits a high cycling capacity retention rate and a low thickness growth rate, indicating that the lithium-ion battery has good cycling stability.

**Table 4**

| | Type of sulfur-oxygen double bond-containing cyclic compound | Mass percentage of sulfur-oxygen double bond-containing cyclic compound (%) | Type of dinitrile compound | Mass percentage of dinitrile compound (%) | Mass percentage of base solvent (%) | Cycling capacity retention rate (%) | Cycling thickness growth rate (%) |
|---|---|---|---|---|---|---|---|
| Example 1-2 | / | / | / | / | 64.5 | 85 | 17 |
| Example 4-1 | 1,3-propane sultone | 2.5 | Glutaronitrile | 0.1 | 61.9 | 86 | 15 |
| Example 4-2 | 1,3-propane sultone | 2.5 | Glutaronitrile | 1.5 | 60.5 | 87 | 15 |
| Example 4-3 | 1,3-propane sultone | 2.5 | Glutaronitrile | 3 | 59 | 87 | 14 |
| Example 4-4 | 1,3-propane sultone | 0.1 | Glutaronitrile | 1.5 | 62.9 | 87 | 14 |
| Example 4-5 | 1,3-propane sultone + 2,4-butane sultone | 1 + 1.5 | Suberonitrile + adiponitrile | 0.5 + 1 | 60.5 | 86 | 13 |
| Example 4-6 | 1,4-butane sultone + 2,4-butane sultone | 2 + 3 | Sebaconitrile + methylglutaronitrile | 1 + 0.5 | 58 | 86 | 12 |

| | | | | | | | |
|---|---|---|---|---|---|---|---|
| Note: (1) The "/" in Table 4 indicates that there is no corresponding preparation parameter, substance, or performance parameter. (2) Taking Example 4-5 as an example, "Type of sulfur-oxygen double bond-containing cyclic compound" is "1,3-propane sultone + 2,4-butane sultone", "Type of dinitrile compound" is "Suberonitrile + adiponitrile", "Mass percentage of sulfur-oxygen double bond-containing cyclic compound" is "1 + 1.5", "Mass percentage of dinitrile compound" is "0.5 + 1", indicating that the sulfur-oxygen double bond-containing cyclic compound includes 1,3-propane sultone and 2,4-butane sultone and the dinitrile compound includes suberonitrile and adiponitrile, and that based on the total mass of the electrolyte, the mass percentage of 1,3-propane sultone is 1%, the mass percentage of 2,4-butane sultone is 1.5%, the mass percentage of suberonitrile is 0.5%, and the mass percentage of adiponitrile is 1%. Other examples follow similarly. | | | | | | | |

From Example 1-2, Example 2-2, Example 3-2, Examples 4-1 to 4-6, it can be seen that when both a dinitrile compound and a sulfur-oxygen double bond-containing cyclic compound are added to the electrolyte, and their type and mass percentage are within the ranges in this application, the lithium-ion battery exhibits a high cycling capacity retention rate and a low thickness growth rate, indicating that the lithium-ion battery has good cycling stability.

**Table 5**

| | Type of inorganic material on particle surface of silicon-based material | Mass percentage of inorganic material on particle surface of silicon-based material (%) | Cycling capacity retention rate (%) | Cycling thickness growth rate (%) |
|---|---|---|---|---|
| Example 1-2 | LiF | 1 | 85 | 17 |
| Example 5-1 | LiF | 0.5 | 85 | 16 |
| Example 5-2 | NaF + MgF₂ | 1 + 0.5 | 86 | 14 |
| Example 5-3 | KF + CaF₂ | 0.6 + 0.6 | 86 | 13 |
| Example 5-4 | KF + CaF₂ | 1 + 1 | 87 | 12 |

| | | | | |
|---|---|---|---|---|
| Note: (1) Taking Example 5-2 as an example, "Type of inorganic material on particle surface of silicon-based material" is "NaF + MgF2", "Mass percentage of inorganic material on particle surface of silicon-based material" is "1 + *0.5",* indicating that the inorganic material on the surface of the silicon-based material particles includes NaF and MgF₂, and that based on the total mass of the silicon-based material, the mass percentage of NaF is 1%, the mass percentage of MgF₂ is 0.5%. Other examples follow similarly. | | | | |

The type of the silicon-based material and the type and percentage of the inorganic material present on the particle surface generally affect the cycling stability of the lithium-ion battery. From Example 1-2 and Examples 5-1 to 5-4, it can be concluded that with the inorganic material present on the surface of the silicon-based material and the type and percentage of the inorganic material being within the foregoing ranges, the lithium-ion battery exhibits a high cycling capacity retention rate and a low thickness growth rate, indicating that the lithium-ion battery has good cycling stability.

**Table 6**

| | Mass percentage of base solvent (%) | First component | | | | Type of dinitrile compound | Mass percentag e of dinitrile compound (%) | Type of sulfur-oxygen double bond-containing cyclic compound | Mass percentage of sulfur-oxygen double bond-containing cyclic compound (%) | Cycling capacity retention rate (%) | Cycling thickness growth rate (%) |
|---|---|---|---|---|---|---|---|---|---|---|---|
| | | Type of linear carbonate | Mass percentag e of linear carbonate (%) | Type of linear carboxylate | Mass percentage of linear carboxylate (%) | | | | | | |
| Example 1-2 | 64.5 | / | / | / | / | / | / | / | / | 85 | 17 |
| Example 6-1 | 59.5 | Diethyl carbonate | 5 | / | / | / | / | / | / | 85 | 15 |
| Example 6-2 | 29.5 | Diethyl carbonate | 35 | / | / | / | / | / | / | 86 | 15 |
| Example 6-3 | 9.5 | Diethyl carbonate | 55 | / | / | / | / | / | / | 86 | 16 |
| Example 6-4 | 59.5 | / | / | Propyl propionate | 5 | / | / | / | / | 86 | 14 |
| Example 6-5 | 29.5 | / | / | Propyl propionate | 35 | / | / | / | / | 87 | 14 |
| Example 6-6 | 9.5 | / | / | Propyl propionate | 55 | / | / | / | / | 87 | 16 |
| Example 6-7 | 59.5 | Diethyl carbonate | 2.5 | Propyl propionate | 2.5 | / | / | / | / | 86 | 13 |
| Example 6-8 | 29.5 | Dimethyl carbonate | 15 | Isobutyl propionate | 20 | / | / | / | / | 87 | 13 |
| Example 6-9 | 9.5 | Dipropyl carbonate | 30 | Ethyl isobutyrate | 25 | / | / | / | / | 87 | 15 |
| Example 6-10 | 28 | Dimethyl carbonate | 15 | Isobutyl propionate | 20 | Adiponitrile | 1.5 | / | / | 88 | 12 |
| Example 6-11 | 27 | Dimethyl carbonate | 15 | Isobutyl propionate | 20 | / | / | 2,4-butane sultone | 2.5 | 87 | 13 |
| Example 6-12 | 28 | Dimethyl carbonate | 15 | Isobutyl propionate | 20 | Glutaronitrile | 1.5 | / | / | 88 | 13 |

| | | | | | | | | | | | |
|---|---|---|---|---|---|---|---|---|---|---|---|
| The "/" in Table 6 indicates that there is no corresponding preparation parameter, substance, or performance parameter. | | | | | | | | | | | |

The type and percentage of the first component generally affect the cycling stability of the lithium-ion battery. From Example 1-2 and Examples 6-1 to 6-9, it can be concluded that when the type and percentage of the first component are within the foregoing ranges, the lithium-ion battery exhibits a high cyclic capacity retention rate and a low thickness growth rate, indicating that the lithium-ion battery has good cycling stability.

The composition of the electrolyte generally affects the cycling stability of the lithium-ion battery. From Example 1-2, Example 2-2, Example 3-2, and Examples 6-10 to 6-12, it can be concluded that when the dinitrile compound or the sulfur-oxygen double bond-containing cyclic compound is added to the electrolyte including the first component, the composition of the electrolyte is still within the range in this application, and the lithium-ion battery exhibits a high cycling capacity retention rate and a low thickness growth rate, indicating that the lithium-ion battery has good cycling stability.

Terms "include", "comprise", or any of their variants are intended to cover a non-exclusive inclusion, such that a process, method, or article including a series of elements includes not only those elements but also other elements that are not expressly listed, or further includes elements inherent to such process, method, or article.

Some embodiments in this specification are described in a related manner. For a part that is the same or similar between these embodiments, reference may be made between these embodiments. Each embodiment focuses on differences from other embodiments.

The foregoing descriptions are merely preferred embodiments of this application, and are not intended to limit this application. Any modifications, equivalent replacements, improvements, and the like made without departing from the spirit and principle of this application shall fall within the protection scope of this application.

## Claims

1. An electrochemical apparatus, comprising a negative electrode plate and an electrolyte, **characterized in that**,
the negative electrode plate comprises a negative electrode material layer; the negative electrode material layer comprises a silicon-based material, the silicon-based material comprises silicon element; and based on a total mass of the negative electrode material layer, a mass percentage of the silicon element is 30% to 60%; and
the electrolyte comprises fluoroethylene carbonate and a compound of formula I: 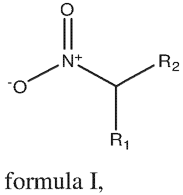
wherein R₁ and R₂ are each independently selected from hydrogen atom, fluorine atom, substituted or unsubstituted C₁-C₅ alkyl group, substituted or unsubstituted C₆-C₁₀ aryl group, and substituted or unsubstituted C₂-C₆ carboxylate group, and when substituted, the substituents on the carboxylate group, the alkyl group, and the aryl group are fluorine atoms.

2. The electrochemical apparatus according to claim 1, **characterized in that**, the compound of formula I comprises at least one of the following compounds:

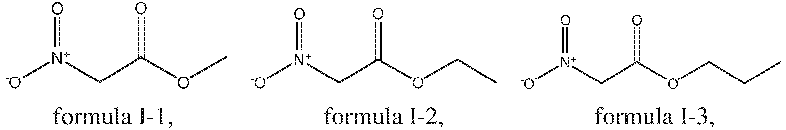

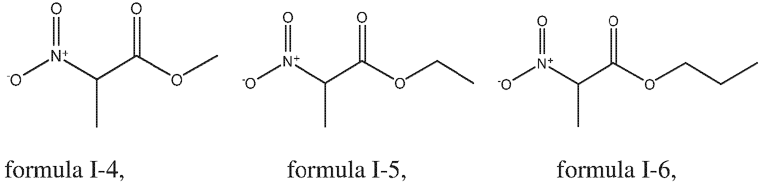

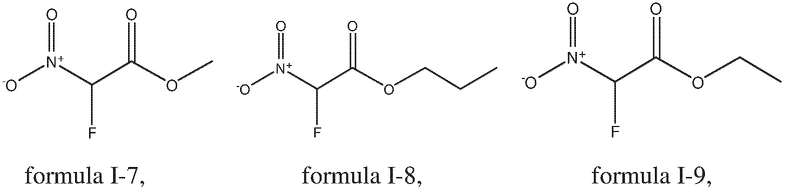

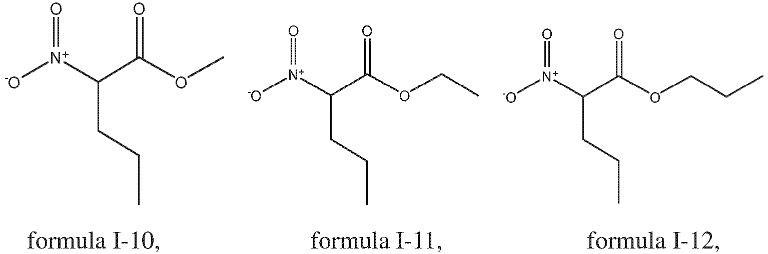

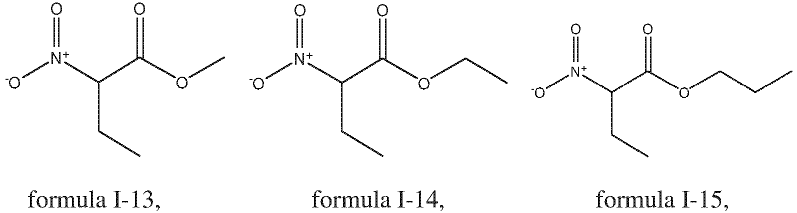

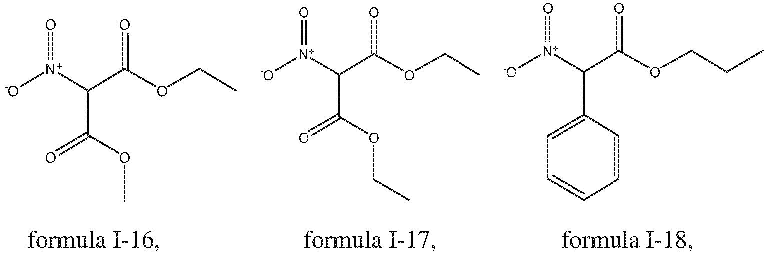

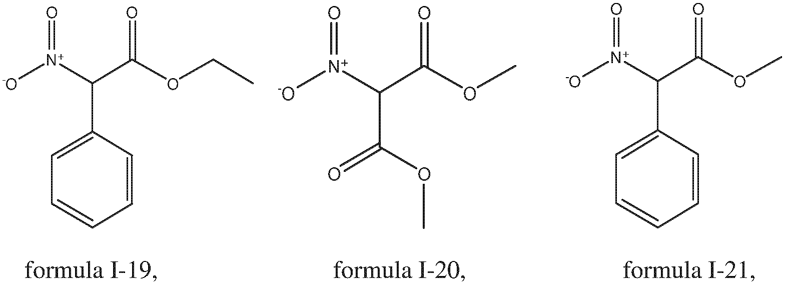

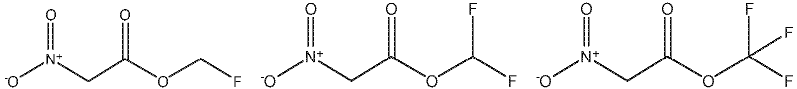

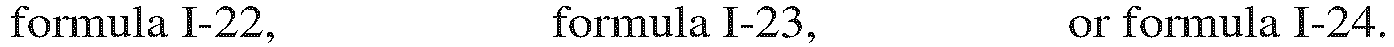

3. The electrochemical apparatus according to claim 1, **characterized in that**, based on a total mass of the electrolyte, a mass percentage of fluoroethylene carbonate is 1% to 30%.

4. The electrochemical apparatus according to claim 1, **characterized in that**, based on a total mass of the electrolyte, a mass percentage of fluoroethylene carbonate is 10% to 30%.

5. The electrochemical apparatus according to claim 1, **characterized in that**, based on a total mass of the electrolyte, a mass percentage of the compound of formula I is 0.01% to 5%.

6. The electrochemical apparatus according to claim 1, **characterized in that**, based on a total mass of the electrolyte, a mass percentage of the compound of formula I is 0.1% to 2%.

7. The electrochemical apparatus according to claim 1, **characterized in that**, the electrolyte further comprises a dinitrile compound; the dinitrile compound comprising at least one of succinonitrile, glutaronitrile, methylglutaronitrile, adiponitrile, pimelonitrile, suberonitrile, azelaonitrile, or sebaconitrile; and
based on a total mass of the electrolyte, a mass percentage of the dinitrile compound is 0.1% to 3%.

8. The electrochemical apparatus according to claim 1, **characterized in that**, the electrolyte further comprises a sulfur-oxygen double bond-containing cyclic compound; the sulfur-oxygen double bond-containing cyclic compound comprising at least one of 1,3-propane sultone, 1,4-butane sultone, or 2,4-butane sultone; and
based on a total mass of the electrolyte, a mass percentage of the sulfur-oxygen double bond-containing cyclic compound is 0.1% to 5%.

9. The electrochemical apparatus according to claim 1, **characterized in that**, the silicon-based material comprises at least one of a silicon-oxygen composite material or a silicon-carbon composite material; an inorganic material is present on a surface of a particle of the at least one of the silicon-oxygen composite material or the silicon-carbon composite material; and the inorganic material comprises at least one of LiF, NaF, KF, MgF₂, CaF₂, or AlF₃; and
based on a mass of the silicon-based material, a mass percentage of the inorganic material is 0.5% to 2%.

10. The electrochemical apparatus according to claim 1, **characterized in that**, the electrolyte further comprises a first component; and the first component comprises at least one of C₂-C₁₀ linear carbonate or C₂-C₁₀ linear carboxylate;
the C₂-C₁₀ linear carbonate comprises at least one of dimethyl carbonate, diethyl carbonate, or dipropyl carbonate;
the C₂-C₁₀ linear carboxylate comprises at least one of propyl acetate, butyl acetate, ethyl propionate, propyl propionate, butyl propionate, ethyl butyrate, propyl butyrate, butyl butyrate, ethyl isobutyrate, propyl isobutyrate, butyl isobutyrate, or isobutyl isobutyrate; and
based on a total mass of the electrolyte, a mass percentage of the first component is 5% to 55%.

11. An electronic apparatus, comprising the electrochemical apparatus according to any one of claims 1 to 10.
